## Europäisches Patentamt

## European Patent Office

## Office européen des brevets

(19)

(11) Veröffentlichungsnummer: **0 023 020**
**B1**

(12) **EUROPÄISCHE PATENTSCHRIFT**

(45) Veröffentlichungstag der Patentschrift:
14.03.84

(51) Int. Cl.³: **G 01 D 15/00**, G 01 D 15/02

(21) Anmeldenummer: 80104116.1

(22) Anmeldetag: 15.07.80

(54) Löschvorrichtung für eine Schreibvorrichtung.

(30) Priorität: 19.07.79 DE 2929321

(43) Veröffentlichungstag der Anmeldung:
28.01.81 Patentblatt 81/4

(45) Bekanntmachung des Hinweises auf die Patenterteilung:
14.03.84 Patentblatt 84/11

(84) Benannte Vertragsstaaten:
AT BE CH FR GB IT LI LU NL SE

(56) Entgegenhaltungen:
DE - A - 479 308
DE - B - 1 173 676
DE - C - 478 265
FR - A - 2 359 399
GB - A - 1 028 192
US - A - 3 184 748

(73) Patentinhaber: Peter-Uhren GmbH,
Postfach 148 Neckarstrasse 60, D-7210 Rottweil (DE)

(72) Erfinder: Tesch, Bernhard, Im Baumgarten 4,
CH-6373 Ennetbürgen/Nidwalden (CH)

(74) Vertreter: Weickmann, Heinrich, Dipl.-Ing. et al,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22,
D-8000 München 86 (DE)

BUNDESDRUCKEREI BERLIN

## Löschvorrichtung für eine Schreibvorrichtung

Die Erfindung betrifft eine Löschvorrichtung für eine Schreibvorrichtung nach dem Oberbegriff des Patentanspruchs 1.

Es sind Schreibvorrichtungen bekannt, bei denen Meßwerte in Abhängigkeit von der Zeit, beispielsweise auf einem in einer Richtung bewegten Papierstreifen, aufgezeichnet werden. Dabei kann der Ausschlag eines Meßwertzeigers unmittelbar zum Aufzeichnen ausgenutzt werden oder es wird mit meßtechnischen Hilfsmitteln ein Schreiborgan bewegt. Wenn dieses Schreiborgan dauernd mit dem sich bewegenden Papier in Verbindung bleibt, entsteht auf dem Papier ein Kurvenzug.

Aus US-A-3 184 748 ist eine Schreibvorrichtung bekannt, bei der durch einen Schreibstift in einer Schreibschicht, die aus einem verformbaren Material besteht, bei einer Bewegung der Schreibschicht relativ zum Schreibstift ein Kurvenzug erzeugbar ist. Durch eine nichtfedernde rakelähnliche Vorrichtung, die die Form eines auf der Schreibschicht aufliegenden Wischtuches aufweist, kann der Kurvenzug wieder verwischt werden. Dabei besteht ein Nachteil darin, daß keine zufriedenstellende Auslöschung eines durch den Schreibstift erzeugten Kurvenzuges erfolgen kann, weil die rakelähnliche Vorrichtung nur auf der Schreibschicht aufliegt.

Aus der FR-A-2 359 399 ist eine Schreibvorrichtung bekannt, bei der eine flexible Unterlage, die auf einem Endlosband angeordnet ist, eine aus einem flüssigen Material mit einer vorgegebenen Viskosität bestehende Schreibschicht trägt. In dieser Schreibschicht sind durch einen Schreibstift Kurvenzüge dadurch erzeugbar, daß in der Schreibschicht durch den Schreibstift eine bis zur flexiblen Unterlage reichende Rille erzeugt wird. Es sind bei dieser bekannten Schreibvorrichtung außerdem Sammelfinger vorgesehen, die die Ränder des Endlosbandes abwischen.

Die Aufgabe der vorliegenden Erfindung besteht darin, eine Löscheinrichtung für eine Schreibvorrichtung derart zu verbessern, daß sie eine stets glatte Schreibschicht konstanter Dicke erzeugt, deren Oberfläche parallel zur Oberfläche des Schichtträgers verläuft.

Diese Aufgabe wird durch eine wie eingangs bereits erwähnte Löschvorrichtung für eine Schreibvorrichtung gelöst, die durch die in dem kennzeichnenden Teil des Patentanspruchs 1 aufgeführten Merkmale gekennzeichnet ist.

Ein wesentlicher Vorteil der Erfindung besteht darin, daß sich der Abstand zwischen der unteren Kante des Rakels und dem Schichtträger selbständig in Abhängigkeit von der Beschaffenheit der Schreibschicht, dem Preßdruck, der Geschwindigkeit und dem Staudruck einstellen kann.

Als besonders günstig hat sich ein Winkel zwischen der Oberfläche der Schreibschicht und der der Schreibschicht zugewandten Begrenzungsfläche der rakelähnlichen Vorrichtung von 4 bis 8° erwiesen.

Vorzugsweise sind seitlich von der rakelähnlichen Vorrichtung mit dieser überlappend weitere rakelähnliche Vorrichtungen so vorgesehen, daß an den seitlichen Grenzen der rakelähnlichen Vorrichtung aufgesammeltes Material der Schreibschicht wieder zur Mitte der Schreibschicht führbar ist. Auf diese Weise wird gewährleistet, daß das Material der Schreibschicht auf der gesamten, von dem Schreibstift zu erfassenden Breite der Schreibschicht erhalten und gleichmäßig verteilt bleibt.

Vorzugsweise ist bei dieser Ausführungsform an jeder Seite der rakelähnlichen Vorrichtung vom Schreibstift aus gesehen hinter der rakelähnlichen Vorrichtung eine weitere rakelähnliche Vorrichtung angeordnet, wobei die weiteren rakelähnlichen Vorrichtungen mit der rakelähnlichen Vorrichtung einen Winkel einschließen.

Als Material für die rakelähnliche Vorrichtung und gegebenenfalls für die weiteren rakelähnlichen Vorrichtungen ist Glas, Kunststoff, Stahl oder Messing besonders gut geeignet.

Vorteilhafterweise werden die Materialien der rakelähnlichen Vorrichtung, gegebenenfalls der weiteren rakelähnlichen Vorrichtungen, der Schreibschicht und des Schichtträgers so ausgewählt, daß die Adhäsion zwischen der Schreibschicht und dem Schichtträger größer ist als die Adhäsion zwischen der rakelähnlichen Vorrichtung und der Schreibschicht und gegebenenfalls zwischen den weiteren rakelähnlichen Vorrichtungen und der Schreibschicht. Auf diese Weise wird vermieden, daß Material der Schreibschicht durch die rakelähnliche Vorrichtung abgetragen wird.

Zur Erzielung einer besonders glatten Oberfläche der Schreibschicht ist die untere Kante der rakelähnlichen Vorrichtung und gegebenenfalls der weiteren rakelähnlichen Vorrichtungen vorzugsweise hochglanzpoliert.

Ein besonders gutes Glätten der Oberfläche der Schreibschicht läßt sich vorteilhafterweise dadurch bewirken, daß die rakelähnliche Vorrichtung und/oder die weiteren rakelähnlichen Vorrichtungen vorzugsweise beheizt wird bzw. werden.

Eine weitere Maßnahme zur Erzielung einer besonders gut geglätteten Oberfläche der Schreibschicht durch die rakelähnliche Vorrichtung besteht darin, daß die rakelähnliche Vorrichtung vorzugsweise in Richtung der unteren Kante bewegt wird. Auf diese Weise wird ein Verschmieren der Schreibschicht bewirkt.

Ein wesentlicher Vorteil der Erfindung besteht darin, daß fortwährend Meßdaten allgemeiner Art für eine vorgegebene Zeit speicherbar und nach der vorgegebenen Zeit wieder löschbar sind. Auf diese Weise können laufend Prozesse überwacht werden, bei denen nur die Anzeige von Meßwerten der letzten Minuten oder Sekunden von Bedeutung ist.

Die Erfindung eignet sich vorteilhafterweise zur Anwendung als Fahrtenschreiber in einem Kraftfahrzeug, beispielsweise in einem Automobil. Es können damit z. B. fortlaufend die Geschwindigkeiten des Automobils beinhaltende Meßdaten erfaßt werden. Auf diese Weise ist es beispielsweise im Falle eines Unfalls möglich, aus den aufgerichteten Daten Rückschlüsse auf die Geschwindigkeit bzw. das Bremsverhalten während der letzten Zeit bzw. der letzten Meter, beispielsweise der letzten 400 Meter, vor dem Unfall bzw. dem Stillstand des Automobils zu ziehen.

Die Erfindung läßt sich vorteilhafterweise in Verbindung mit Pressensteuerungen zur Ermittlung bzw. Registrierung der eingestellten Bedienungsgegebenheiten zum Zeitpunkt eines möglichen Unfalls anwenden.

Zur Einjustierung von Impulsfolgen werden derzeit auf elektronischer Basis Geräte unter dem Namen »Logik-Tester« bzw. »Logikkanalysatoren« angeboten. Diese Geräte sind geeignet im MHz-Bereich zu arbeiten und Testarbeiten auf dem Gebiet der Mikroprozessoren, der Datenverarbeitung und dergleichen durchzuführen. Vorteilhafterweise können diese Geräte im Bereich langsamer Logikabläufe, beispielsweise im Zusammenhang mit Sicherheitssteuerungen durch die Löschvorrichtung nach der Erfindung ergänzt werden. Dabei werden laufend die zuletzt gemessenen Impulse bzw. Impulsfolgen angezeigt, so daß die Auswirkungen der vorgenommenen Justiervorgänge fortwährend ersichtlich sind.

Die erfindungsgemäße Löschvorrichtung kann vorteilhafterweise auch im Zusammenhang mit einem Oszillograph für die Anzeige bzw. Aufzeichnung von langsamen Vorgängen verwendet werden.

Vorteilhafterweise kann durch die vorliegende Erfindung ein zeitraubender Austausch des Aufzeichnungsmediums vermieden werden.

Im folgenden werden Ausführungsformen der Erfindung im Zusammenhang mit den Figuren näher erläutert. Es zeigt

Fig. 1 eine schematische Darstellung des Schichtträgers, der auf dem Schichtträger aufgebrachten Schreibschicht, des Schreibstifts und der rakelähnlichen Vorrichtung zur Erläuterung des Prinzips der Erfindung,

Fig. 2 eine Ausführungsform der Erfindung, bei der der Schichtträger 1 die Form eines geschlossenen, über Walzen laufenden Bandes aufweist,

Fig. 3 eine schematische Darstellung der Anordnung von weiteren rakelähnlichen Vorrichtungen.

Die erfindungsgemäße Löschvorrichtung ist im Zusammenhang mit Schreibvorrichtungen anwendbar, bei denen in einer auf einem Schichtträger aufgebrachten Schreibschicht durch einen Schreibstift bzw. Schreibgriffel Meßdaten in der Form eines Kurvenzuges oder einer unterbrochenen Punkt- bzw. Strichfolge eingegraben bzw. aufgezeichnet werden. Dabei wird der Schichtträger mit der darauf aufgebrachten Schreibschicht relativ zur Position des Schreibstifts bewegt. Die Löschvorrichtung weist die Form einer rakelähnlichen Vorrichtung auf, die in einem vorgegebenen Abstand von dem Schreibstift angeordnet ist und den aufgezeichneten bzw. eingegrabenen Kurvenzug oder die Punkt- bzw. Strichfolge wieder löscht. Die durch die Löschvorrichtung gelöschten Bereiche der Schreibschicht können zu dem Schreibstift zurückgeführt werden, und es kann in diese Bereiche wieder eingeschrieben werden.

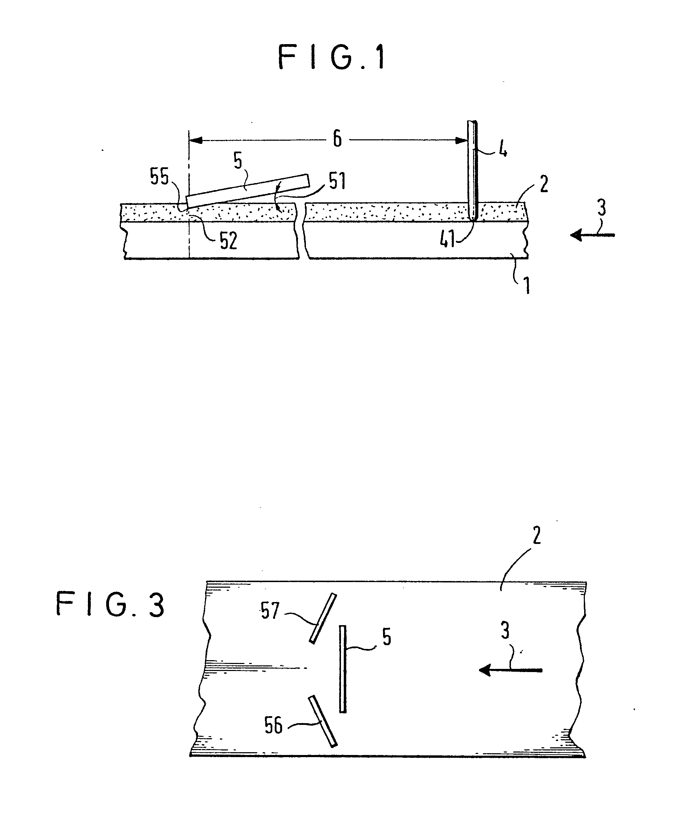

In der Fig. 1 ist der Schichtträger mit 1 bezeichnet. Dieser Schichtträger kann die Form einer Platte, einer kreisförmigen Scheibe, eines Zylinders, eines Bandes oder einer Folie haben. Vorzugsweise besteht der Schichtträger aus einem Material, das mechanisch so fest ist, daß es durch den Schreibstift nicht deformiert wird. Vorzugsweise werden band- oder folienförmige Schichtträger zur Verbesserung der mechanischen Festigkeit durch einen Hilfsträger unterstützt.

Das Material des Schichtträgers ist so ausgewählt, daß es in bezug auf den Schreibgriffel abrieb- und kratzfest ist.

Die Oberfläche des Schichtträgers 1, auf die die Schreibschicht 2 aufgebracht wird, ist eben und weist vorzugsweise eine gewisse Rauhigkeit im Mikrometerbereich auf. Durch diese Rauhigkeit wird erreicht, daß die Schreibschicht 2 besser auf dem Schichtträger 1 haftet.

Das Material des Schichtträgers 1 ist so ausgewählt, daß es mit dem Material der Schreibschicht 2 gut verträglich ist und daß zwischen den Materialien dieser beiden Schichten beispielsweise keine chemischen Reaktionen auftreten.

Als Materialien für den Schichtträger 1, die die oben angegebenen Bedingungen erfüllen, eignen sich Glas und Stahl besonders gut. Als Material für den Schichtträger 1 eignen sich aber auch Kunststoffe, die die oben aufgeführten Bedingungen erfüllen. Beispielsweise kann der Schichtträger 1 aus PVC-Material bestehen.

Für die Schreibschicht 2 sind fettähnliche Medien bzw. Fette besonders gut geeignet, in die durch den Schreibstift ein Kurven- bzw. Linienzug einschreibbar ist, der anschließend durch das Rakel wieder eingeebnet werden kann. Dabei wird die Art des Fettes in Abhängigkeit von der Geschwindigkeit des Schichtträgers und der Größe des Rakelspalts bestimmt. Beispielsweise eignen sich »Fett Klüber 3278«, Tuschierfarbe oder Molikote-Fette besonders gut. Die Schreibschicht 2 kann aber auch durch eine Pulverbeschichtung des Schichtträgers 1 erzeugt werden. Als Pulver kann vorzugsweise Silber-, Eisen-Emailpulver, Talkumpuder oder Kunststoffpulver verwendet werden. Zur Beschichtung läuft der Schichtträger 1 durch einen Behälter, in dem sich das jeweilige Pulver befindet. Dieses wird von dem Schichtträger 1 durch Adhäsion oder elektrostatische bzw. magnetische Anziehung aufgenommen und festgehalten. In dem Pulver geschriebene Linien bzw. Kurvenzüge werden durch die rakelähnliche Vorrichtung, die auch durch den Behälter selbst gebildet sein kann, ebenfalls durch Adhäsion oder elektrostatische bzw. magnetische Anziehung wieder gelöscht.

Wie aus der Fig. 1 hervorgeht, durchdringt der schematisch dargestellte Schreibstift bzw. Schreibgriffel 4 beim mechanischen Schreiben die Schreibschicht 2 so weit, daß er auf der Oberfläche des Schichtträgers 1 aufliegt. Das Einschreiben erfolgt durch die zuvor bereits erwähnte Bewegung des Schichtträgers mit der darauf befindlichen Schreibschicht 2 in bezug auf den Schreibstift 4. Beispielsweise wird der Schichtträger 1 in die Richtung des Pfeils 3 bewegt. Der Schreibstift 4 wird gleichzeitig mit der Bewegung des Schichtträgers 1 einem anliegenden analogen Meßsignal entsprechend senkrecht zur Zeichenebene bewegt.

Das Schreiben kann auf elektrische Weise dadurch erfolgen, daß Material bzw. Puder mit elektrostatischer Aufladung auf die Trägerschicht aufgestäubt wird. Durch eine geeignete Umladung über den Schreibstift kann die Beschichtung dann wieder abgezogen werden. Dieser Vorgang entspricht der Umkehrung des Verfahrens des elektrostatischen Auftragens.

Die Zusammensetzung der Schreibschicht 2 ist bezüglich der Haftfestigkeit, des Farbkontrasts und der Viskosität von Fall zu Fall zu bemessen. Beispielsweise wird sie in Abhängigkeit von den Geschwindigkeiten des Schichtträgers 1 und des Schreibstifts 4, der Schichtdicke der Schreibschicht 2, der beim Schreiben herrschenden Temperatur und der Luftfeuchtigkeit bestimmt.

Der in der Fig. 1 dargestellte Schreibstift 4 wird vorzugsweise mit einem Druck von 0 bis 10 p auf die Schicht 2 aufgepreßt. Er besitzt vorzugsweise eine rund bzw. kugelförmig gestaltete Spitze 41, die beispielsweise der Schreibkugel eines Kugelschreibers ähnlich ist. Als Schreibstifte können beispielsweise auch fliegenbeinähnliche Schreibstifte Verwendung finden.

Die rakelförmige Vorrichtung, die die Aufgabe hat, in die Schreibschicht eingeschriebene Linien bzw. Kurvenzüge wieder zu löschen, ist in der Fig. 1 schematisch dargestellt und mit 5 bezeichnet. Sie ist von dem Schreibstift 4 durch einen vorgegebenen Abstand 6 getrennt. Durch diesen Abstand 6 wird die Länge des aufgeschriebenen Kurvenzugs und in Abhängigkeit von der Geschwindigkeit des Schichtträgers 1 die Zeit zwischen dem Einschreiben und dem Löschen bestimmt.

Bei der rakelähnlichen Vorrichtung bzw. dem Rakel 5 handelt es sich beispielsweise um eine messerähnliche Schneide bzw. um ein spachtelförmiges Teil mit einer vorgegebenen Breite, wobei die Schneide bzw. das spachtelförmige Teil gegenüber der Schreibschicht 2 um einen Winkel 51 von 4° bis 8° geneigt angeordnet ist. Das Rakel 5 ist so ausgerichtet, daß es zur Oberfläche des Schichtträgers 1 absolut parallel ist. Zwischen der unteren Kante 55 des Rakels 5 und der Oberfläche des Schichtträgers 1 besteht ein Abstand 52, der beweglich federnd einstellbar ist. Auf diese Weise wird erreicht, daß sich dieser Abstand 52 in Abhängigkeit von der Beschaffenheit der Schreibschicht 2, der Geschwindigkeit des Schichtträgers 1, dem Preßdruck und dem Staudruck selbständig einstellen kann. Die untere Kante 55 des Rakels 5 dringt in einen Teil der Schreibschicht 2 ein, so daß in dieser enthaltene Linien bzw. Kurvenzüge gelöscht werden. Als Material für das Rakel 5 ist Glas, Kunststoff, Stahl oder Messing geeignet. Vorzugsweise wird dieses Material in Abhängigkeit von dem Material der Schreibschicht 2 so ausgewählt, daß die Adhäsion der Schreibschicht 2 bezüglich des Schichtträgers 1 größer ist als die Adhäsion der Schreibschicht 2 bezüglich des Rakels 5. Die Oberfläche des Rakels 5 ist vorzugsweise auf Hochglanz poliert.

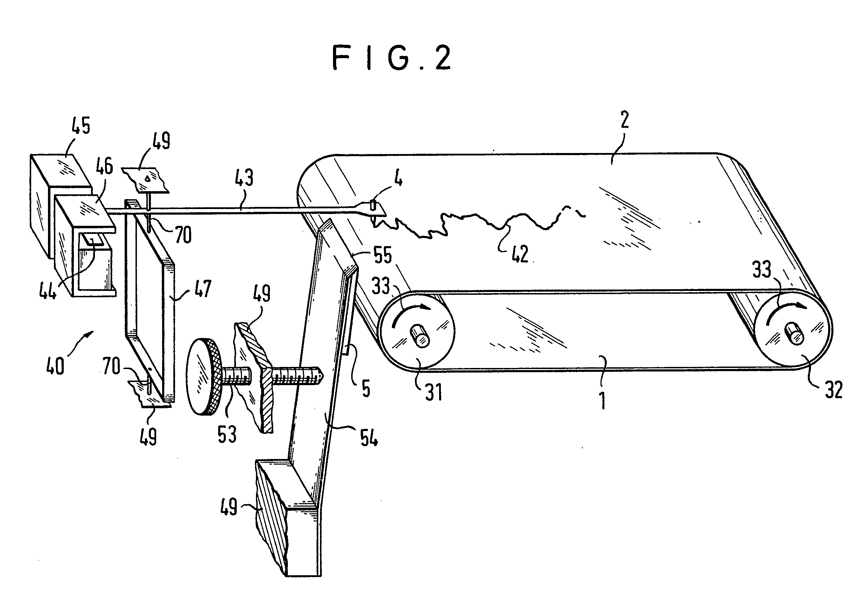

In der Fig. 2 ist eine Ausführungsform der erfindungsgemäßen Löschvorrichtung dargestellt. Einzelheiten der Fig. 2, die bereits im Zusammenhang mit der Fig. 1 beschrieben wurden, tragen die entsprechenden Bezugszeichen. Der Schichtträger 1 weist die Form eines endlosen Bandes auf, das auf Walzen 31 und 32 angeordnet ist und durch diese Walzen gespannt wird. Beispielsweise werden die Walzen 31 und 32 in der durch die Pfeile 33 angegebenen Richtung gedreht. Der Schreibstift 4 ist an einem Gestänge bzw. Schreibarm 43 befestigt und wird durch eine Einrichtung einem an der Einrichtung anliegenden analogen Signal entsprechend bewegt, so daß in der auf dem Schichtträger 1 aufgebrachten Schreibschicht 2 bei der Bewegung des Schichtträgers 1 der Kurvenzug 42 entsteht. An der Stelle, an der der Schreibstift 4 auf das Band drückt, ist vorzugsweise eine Stütze vorgesehen. Wenn der Schreibstift 4, wie dies in der Fig. 2 dargestellt ist, im Bereich einer der Walzen gegen das Band drückt, braucht keine eigene Stütze vorgesehen werden.

Als Einrichtung kann jede Vorrichtung Verwendung finden, die geeignet ist, ein analoges Meßsignal auszuwerten und in eine den Schreibstift 4 bewegende Kraft umzuwandeln. In der Fig. 2 ist beispielsweise eine Einrichtung dargestellt, bei der das analoge Signal einer sich in einem magnetischen Feld befindlichen Drehspule 47 zugeführt wird. Die Drehachse 70 dieser Drehspule 47 ist in Teilen 49 des Gehäuses drehbar gelagert. Der Schreibarm 43 ist mit der Drehachse 70 fest verbunden. Auf diese Weise wird die Drehung der Drehachse 47 auf den Schreibarm 43 übertragen. Zur Dämpfung der Bewegung des Schreibarms 43 sind Dämpfungsmagnete 46 und 45 vorgesehen, in deren Luftspalt sich ein ebenfalls mit dem Schreibarm 43 fest verbundener Dämpfungsflügel 44 befindet.

Weitere vorteilhafte Einrichtungen 40 zur Bewegung des Schreibstifts weisen ein Bi-Metall auf, an dem der Schreibstift befestigt ist oder das den Schreibstift selbst darstellt. Beispielsweise kann der Schreibarm eines handelsüblichen Bi-Metall-Thermometers die gemessene Temperatur direkt in die Schreibschicht einschreiben. Da ein Bi-Metall direkt oder indirekt durch einen Stromdurchgang beheizt werden kann, stellt die dabei bewirkte Auslenkung des Bi-Metalls eine Funktion der Stromstärke dar. Vorteilhafterweise kann diese Stromstärke durch das Bi-Metall direkt in die Schreibschicht eingeschrieben werden.

Zur Übertragung von Druckmeßwerten auf die Schreibschicht können als Einrichtung 40 beispielsweise Druckmeßdosen oder Bourdonrohre angewendet bzw. verwendet werden, ohne daß die Meßwerte vor der Übertragung verstärkt werden müssen.

Der Schreibstift kann auch durch eine Einrichtung 40 in der Form einer mechanischen Meßuhr mit einem Abtaststift bewegt werden. Beispielsweise können mit einer solchen Einrichtung mechanische Meßgrößen auf die Schreibschicht übertragen werden. So kann beispielsweise der Durchmesser eines beschichteten Drahtes oder die Dicke eines extrudierten Materials durch die Meßuhr abgetastet werden. Dabei wird die Bewegung des Taststifts der Meßuhr mechanisch auf den Schreibstift übertragen.

Schließlich können als Einrichtung 40 zur Bewegung des Schreibstifts 4 auch bekannte Koordinatengestänge oder sonstige Gelenkgetriebe verwendet werden, die mechanisch, magnetisch, elektrisch, pneumatisch oder hydraulisch gesteuert werden.

Zum Löschen des in der Schreibschicht 2 eingeschriebenen Kurvenzugs 42 ist das Rakel 5 vorgesehen. Dies ist gegenüber der durch den Berührungspunkt gezogenen Tangente um den bereits im Zusammenhang mit der Fig. 1 erwähnten Winkel von 4° bis 8° geneigt. Zur federnden Einstellung des voranstehend bereits genannten Luftspalts zwischen der unteren Kante 55 des Rakels 5 und der Oberfläche des Schichtträgers 1 ist das Rakel an einer Blattfeder 54 in der aus der Fig. 2 ersichtlichen Weise befestigt. Die Blattfeder 54 ist mit einem Teil 49 des Gehäuses fest verbunden und durch eine schematisch dargestellte Stellschraube 53 verstellbar. Durch Drehen der Stellschraube 53 läßt sich die Größe des Luftspalts vergrößern oder verkleinern.

In der Fig. 3 ist eine Weiterbildung einer Löschvorrichtung dargestellt, bei der zusätzlich zu dem Rakel 5 zwei weitere Rakel bzw. rakelähnliche Vorrichtungen 56 und 57 vorgesehen sind. Diese weiteren rakelähnlichen Vorrichtungen haben die Aufgabe, Schreibschichtmaterialien, die seitlich an den Grenzen des Rakels 5 aufgelaufen sind, wieder in die Mitte zu führen. Vorzugsweise sind die weiteren rakelähnlichen Vorrichtungen 56 und 57 gegenüber dem Rakel 5 geneigt angeordnet, wie dies aus der Fig. 5 ersichtlich ist. Die Bewegungsrichtung des Schichtträgers 1 und der darauf befindlichen Schreibschicht 2 ist durch den Pfeil 3 angedeutet.

In Abhängigkeit von der verwendeten Schreibschicht 2 ist es auch möglich, zur Erzielung eines besseren Auslöschens eines in die Schreibschicht 2 eingeschriebenen Kurvenzugs ein beheizbares Rakel und/oder beheizbare weitere rakelähnliche Vorrichtungen zu verwenden. Infolge der Aufwärmung des Rakels wird dann ein besseres Verwischen der Schreibschicht ermöglicht.

Im Zusammenhang mit den zuvor beschriebenen Schreibvorrichtungen können auch Rakel verwendet werden, die in Richtung ihrer Kante bewegbar sind. Auf diese Weise kann ebenfalls ein besseres Auslöschen der in die Schreibschicht geschriebenen Kurvenzüge dadurch bewirkt werden, daß die Schreibschicht infolge dieser Bewegung verschmiert wird. Dabei ähnelt die Bewegung des Rakels einer Bewegung, die beim langsamen Abziehen einer Schicht, beispielsweise beim Abziehen von Betonestrichen ausgeführt wird.

**Patentansprüche**

1. Löschvorrichtung für eine Schreibvorrichtung, bei der Meßwerte in Abhängigkeit von der Zeit auf ein in bezug auf wenigstens einen Schreibstift (4) bewegbares Medium aufzeichenbar sind, wobei der Schreibstift (4) in Abhängigkeit von den Meßwerten in der Ebene des Mediums durch eine Einrichtung zur Bewegung des Schreibstiftes (4) bewegbar ist, das Medium aus einem Schichtträger (1) und einer darauf aufgebrachten Schreibschicht (2) besteht, die Schreibschicht (2) so beschaffen ist, daß der Schreibstift (4) in der Schreibschicht (2) bei der Bewegung des Schichtträgers (1) einen Kurvenzug erzeugt, und in einer vorgegebenen Entfernung von dem Schreibstift (4) eine mit einem vorrichtungsfesten Teil (49) angebrachte rakelähnliche Vorrichtung (5) angeordnet ist, durch die der Kurvenzug in der Schreibschicht (2) wieder löschbar ist, bei der die rakelähnliche Vorrichtung (5) eine untere Kante (55) aufweist, die parallel im Abstand zu der der Schreibschicht (2) zugewandten Oberfläche des Schichtträgers (1) ausgerichtet ist, dadurch gekennzeichnet, daß die rakelähnliche Vorrichtung (5) mit dem vorrichtungsfesten Teil (49) durch eine Feder (54) verbunden und durch diese Feder (54) seine untere Kante (55) von der Oberfläche des Schichtträgers (1) in einem Abstand (52) gehalten ist, der kleiner ist als die Dicke der Schreibschicht (2).

2. Vorrichtung nach Anspruch 1, dadurch gekennzeichnet, daß die rakelähnliche Vorrichtung (5) eine der Schreibschicht (2) zugewandte Begrenzungsfläche aufweist, die unter einem Winkel von 4° bis 8° zu der Oberfläche der Schreibschicht (2) verläuft.

3. Vorrichtung nach Anspruch 1 oder 2, dadurch gekennzeichnet, daß zusätzlich zu der rakelähnlichen Vorrichtung (5) weitere rakelähnliche Vorrichtungen (56, 57) seitlich von der rakelähnlichen Vorrichtung (5) mit dieser überlappend so vorgesehen sind, daß an den seitlichen Grenzen der rakelähnlichen Vorrichtung (5) aufgesammeltes Material der Schreibschicht wieder zur Mitte der Schreibschicht (2) führbar ist.

4. Vorrichtung nach Anspruch 3, dadurch gekennzeichnet, daß an jeder Seite der rakelähnlichen Vorrichtung (5) vom Schreibstift (4) aus gesehen hinter der rakelähnlichen Vorrichtung (5) eine weitere rakelähnliche Vorrichtung (56, 57) angeordnet ist und daß die weiteren rakelähnlichen Vorrichtungen (56, 57) mit der rakelähnlichen Vorrichtung (5) einen Winkel einschließen.

5. Vorrichtung nach einem der vorgenannten Ansprüche, dadurch gekennzeichnet, daß die rakelähnliche Vorrichtung (5) und gegebenenfalls die weiteren rakelähnlichen Vorrichtungen (56, 57) aus Glas, Kunststoff, Stahl oder Messing bestehen.

6. Vorrichtung nach einem der Ansprüche 1 bis 5, dadurch gekennzeichnet, daß die Materialien der rakelähnlichen Vorrichtungen (5), gegebenenfalls der weiteren rakelähnlichen Vorrichtung (56, 57) des Schichtträgers und der Schreibschicht so ausgewählt sind, daß die Adhäsion zwischen der Schreibschicht (2) und dem Schichtträger (1) größer ist als die Adhäsion zwischen der rakelähnlichen Vorrichtung (5) und der Schreibschicht (2) und gegebenenfalls der weiteren rakelähnlichen Vorrichtungen (56, 57) und der Schreibschicht (2).

7. Vorrichtung nach einem der Ansprüche 1 bis 6, dadurch gekennzeichnet, daß die untere Kante (55) der rakelähnlichen Vorrichtung (5) und gegebenenfalls der weiteren rakelähnlichen Vorrichtungen (56, 57) hochglanzpoliert ist.

8. Vorrichtung nach einem der vorgenannten Ansprüche, dadurch gekennzeichnet, daß die rakelähnliche Vorrichtung und/oder die weiteren rakelähnlichen Vorrichtungen beheizbar ist bzw. sind.

9. Vorrichtung nach einem der vorgenannten Ansprüche, dadurch gekennzeichnet, daß die rakelähnliche Vorrichtung (5) in der Richtung der unteren Kante (55) zur besseren Verschmierung der Schreibschicht auslenkbar ist.

## Claims

1. Erasing device for a recording device in which measured values can be recorded in dependence upon time on a medium movable in relation to at least one recording stylus (4), where the recording stylus (4) is movable in dependence upon the measured values in the plane of the medium by a device for moving the recording stylus (4), the medium consists of a coating carrier (1) and a recording coating (2) applied thereto, the recording coating (2) is of such nature that the stylus (4) generates a curve in the recording coating (2) in the movement of the coating carrier, a doctor-type device (5) fitted with a part (49) fast with the device is arranged at a predetermined distance from the recording stylus (4), by which doctor-type device the curve in the recording coating (2) is again erasable, wherein the doctor-type device (5) has a lower edge (55) which is oriented parallel to and with spacing from the upper face of the coating carrier (1) which faces the recording coating (2), characterised in that the doctor-type device (5) is connected by a spring (54) with the part (49) fast with the device and its lower edge (55) is held by this spring (54) at a distance (52) from the upper surface of the coating carrier (1), which distance is less than the thickness of the recording coating (2).

2. Device according to Claim 1, characterised in that the doctor-type device (5) comprises a limiting surface facing the recording coating (2) which extends at an angle of 4° to 8° to the surface of the recording coating (2).

3. Device according to Claim 1 or 2, characterised in that in addition to the doctor-type device (5) further doctor-type devices (56, 57) are provided laterally of the doctor-type device (5) and overlapping this in such a way that material of the recording coating collected on the lateral limits of the doctortype device (5) can be conducted to the middle of the recording coating (2) again.

4. Device according to Claim 3, characterised in that on each side of the doctor-type device (5), behind the doctor-type device (5) seen from the recording stylus (4), a further doctortype device (56, 57) is arranged, and in that the further doctor-type devices (56, 57) include an angle with the doctor-type device (5).

5. Device according to one of the preceding Claims, characterised in that the doctor-type device (5) and the further doctor-type devices (56, 57) if provided consist of glass, synthetic plastics material, steel or brass.

6. Device according to one of Claims 1 to 5, characterised in that the materials of the doctor-type device (5), of any further doctor-type device (56, 57), of the coating carrier and of the recording coating are so selected that the adhesion between the recording coating (2) and the coating carrier (1) is greater than the adhesion between the doctor-type device (5) and the recording coating (2) and any further doctor-type devices (56, 57) and the recording coating (2).

7. Device according to one of Claims 1 to 6, characterised in that the lower edge (55) of the doctor-type device (5) and of any further doctor-type devices (56, 57) is polished to a high gloss.

8. Device according to one of the preceding Claims, characterised in that the doctor-type device and/or the further doctor-type devices is or are heatable.

9. Device according to one of the preceding Claims, characterised in that the doctor-type device (5) is deflectable in the direction of the lower edge (55) for the better obliteration of the recording coating.

## Revendications

1. Dispositif d'effacement pour un appareil enregistreur dans lequel des valeurs de mesure peuvent être enregistrées en fonction du temps sur un support déplaçable par rapport à au moins un style (4), le style (4) pouvant être déplacé en fonction des valeurs de mesure dans le plan du support par un mécanisme pour le mouvement du style (4), le support étant constitué par une couche de base (1) et une couche d'enregistrement (2) appliquée sur cette dernière, laquelle couche d'enregistrement (2) réalisée de façon que lors de l'avance de la couche de base (1) le style (4) produise dans la couche d'enregistrement (2) un trait formant courbe, et à une distance déterminée du style (4) étant disposé un organe (5) du genre racle relié à une partie (49) solidaire de l'appareil et par lequel le trait formant courbe formé dans la couche d'enregistrement (2) peut à nouveau être effacé, lequel organe (5) du genre racle présente une arête inférieure (55) qui s'étend parallèlement à la surface côté couche d'enregistrement (2) de la couche de base (1) à une certaine distance de cette surface, caractérisé en ce que l'organe (5) du genre racle est relié à la partie (49) solidaire de l'appareil par un ressort (54) et son arête inférieure (55) est maintenue par ce ressort (54) éloignée de la surface de la couche de base (1) d'une distance (52) qui est inférieure à l'épaisseur de la couche d'enregistrement (2).

2. Dispositif selon la revendication 1, caractérisé en ce que l'organe (5) du genre racle présente du côté de la couche d'enregistrement (2) une surface limite qui s'étend sous un angle de 4 à 8° par rapport à la surface de la couche d'enregistrement (2).

3. Dispositif selon la revendication 1 ou 2, caractérisé en ce que, outre l'organe (5) du genre racle, d'autres organes (56, 57) du genre racle sont prévus à côté de l'organe (5) du genre racle de façon à chevaucher par rapport à celui-ci de telle sorte que de la matière de la couche d'enregistrement rassemblée au niveau des limites latérales de l'organe (5) du genre racle puisse être ramenée vers le milieu de la couche d'enregistrement (2).

4. Dispositif selon la revendication 3, caractérisé en ce que chaque côté de l'organe (5) du genre racle est disposé, pour un observateur regardant à partir du style (4), derrière l'organe (5) du genre racle un autre organe (56, 57) du genre racle et en ce que ces autres organes (56, 57) du genre racle font un angle avec l'organe (5) du genre racle.

5. Dispositif selon l'une quelconque des revendications précédentes, caractérisé en ce que l'organe (5) du genre racle et éventuellement les autres organes (56, 57) du genre racle sont en verre, matière synthétique, acier ou laiton.

6. Dispositif selon l'une quelconque des revendications 1 à 5, caractérisé en ce que les matières constitutives de l'organe (5) du genre racle, éventuellement de l'organe additionnel (56, 57) du genre racle, de la couche de base et de la couche d'enregistrement sont choisies de telle manière que l'adhérence entre la couche d'enregistrement (2) et la couche de base (1) est plus forte que l'adhérence entre l'organe (5) du genre racle et la couche d'enregistrement (2) éventuellement entre les organes additionnels (56, 57) du genre racle et la couche d'enregistrement (2).

7. Dispositif selon l'une quelconque des revendications 1 à 6, caractérisé en ce que l'arête inférieure (55) de l'organe (5) du genre racle et éventuellement des autres organes (56, 57) du genre racle présente un poli miroir.

8. Dispositif selon l'une quelconque des revendications précédentes, caractérisé en ce que l'organe du genre racle et/ou les autres organes du genre racle peut/peuvent être chauffé(s).

9. Dispositif selon l'une quelconque des revendications précédentes, caractérisé en ce que l'organe (5) du genre racle peut être déplacé en direction de l'arête inférieure (55) pour mieux étaler la couche d'enregistrement.

# F I G . 1

# F I G . 3

# F I G . 2